# EUROPÄISCHE PATENTANMELDUNG

(11) **EP 4 661 320 A2**
(43) Veröffentlichungstag der Anmeldung: **10.12.2025**
(21) Anmeldenummer: 25210149.8
(22) Anmeldetag: 28.01.2022
(51) Int. Cl.: H04B 17/21

(54) **VERFAHREN ZUR UMGEBUNGSDETEKTION EINES UNI- ODER BIDIREKTIONAL FUNKKOMMUNIKATIONSFÄHIGEN KNOTENS**

(30) Priorität: 01.02.2021 DE 102021102216
(62) Teilanmeldung aus: 22153921.6
(71) Anmelder: Diehl Metering Systems GmbH, 90451 Nürnberg (DE)
(72) Erfinder: Petkov, Hristo, 90411 Nürnberg (DE); Schmidt, Christoph, 90403 Nürnberg (DE); Kauppert, Thomas, 90455 Nürnberg (DE); Gottschalk, Klaus, 90610 Winkelhaid (DE); Schröter, Simon, 91052 Erlangen (DE); Meyer, Benjamin, 90419 Nürnberg (DE)
(74) Vertreter: Diehl Patentabteilung

(57) **Zusammenfassung**

Verfahren zur Umgebungsdetektion eines uni-oder bidirektional funkkommunikationsfähigen Knotens (1), insbesondere in Form einer Sensor- und/ oder Aktoreinrichtung, eines Kommunikationsnetzwerkes mit einem mit einer Antenne (3) ausgestatteten Funkmodul (2) mit Sende- (5) und Empfangspfad (6) und einer vorzugsweise energieautarken Energieversorgungseinrichtung (4), insbesondere Batterie, wobei die Umgebungsdetektion auf Basis einer Schätzung der Verstimmung der Antenne (3) des Funkmoduls (2), vorzugsweise zu wiederholten zeitlichen Abständen, erfolgt.

## Beschreibung

Die vorliegende Erfindung betrifft ein Verfahren nach dem Oberbegriff des Patentanspruchs 1 zur Umgebungsdetektion, insbesondere Nahumgebungsdetektion eines uni- oder bidirektional funkkommunikationsfähigen Knotens, insbesondere einer Sensor- und/oder Aktoreinrichtung. Die vorliegende Erfindung betrifft ferner einen funkkommunikationsfähigen Knoten, der gemäß dem vorliegenden Verfahren betrieben wird. Vorzugsweise handelt es sich hierbei um einen ortsfest in einem Kommunikationsnetzwerk installierten Knoten.

### Technologischer Hintergrund

Die derzeitige Entwicklung in der Kommunikationstechnik geht dahin, stets mehr und mehr Prozessoren, Kommunikationsmodule sowie andere Elektronikkomponenten in Gegenständen des täglichen Gebrauchs zu integrieren. Auch einfache elektrische Geräte des täglichen Gebrauchs sollen in absehbarer Zukunft mit einer Kommunikationsfähigkeit ausgestattet werden. Man erhofft sich durch diese Entwicklung große Chancen für die Wirtschaft, aber auch für das Privatleben. Smarte bzw. intelligente Objekte werden zunehmend mit Informations- und Kommunikationstechnik ausgestattet und an den Cyberspace mit seinen umfangreichen Diensten angebunden. Hierdurch werden alltägliche Gegenstände eine neue Qualität erhalten. Gegenstände können über Sensoren ihre Umgebung wahrnehmen, sich miteinander vernetzen, auf Internetservices zugreifen oder sogar mit Menschen interagieren. Derartige Sensoren sollen als "Knoten" im sogenannten loT ("Internet of Things") eingesetzt werden. Aktoren können mechanisch oder elektromagnetisch auf derartige Gegenstände einwirken, oder diese mit (elektrischen, vorzugsweise digitalen) Steuersignalen beaufschlagen.

Derartige Sensoren bzw. Aktoren sollen möglichst kleinbauend sein. Da ein Netzanschluss oftmals nicht verfügbar ist, müssen sie in der Regel über lange Zeiträume bzw. lange Standzeiten autark mit Batterien betrieben werden. Deshalb muss die Funkkommunikation mit möglichst geringem energetischen Aufwand zuverlässig betrieben werden können. Das setzt im Funkmodul eine hohe Gesamtempfindlichkeit infolge guter Resonanzanpassung der Schaltung an die in der Regel schmalbandig dimensionierte Antenne voraus.

Hinzukommt, dass eine mehr und mehr gesteigerte Leistungsfähigkeit in Bezug auf das Generieren und Versenden von Daten gefordert wird, mit der Folge, dass gleichzeitig der Energieverbrauch der Geräte zunehmen wird. Die Technologie im Bereich der Speicherung von elektrischer Energie schreitet jedoch nicht so rasch voran. Die erweiterte Funktionalität der Geräte durch das sogenannte loT wird daher Probleme in Bezug auf den hierdurch notwendigen Energieverbrauch mit sich bringen.

Bei Sensoren besteht zudem ein Interesse, die Situations- oder Objektumgebung der Sensoren bei der Auswertung der mit den Sensoren gezielt abgefragten per Funk übertragenen Messgrößen zu bestimmen. Beispielsweise ist es möglich, dass Sensoreinrichtungen an falschen Orten oder in falschen Gehäusen, als dies ursprünglich geplant war, installiert werden. Ferner möchte man bei Sensoren Kenntnis von bestimmten Gegebenheiten erhalten, wie z. B. über Manipulationen an fest installierten Sensoren (z.B. Verbrauchszählern) oder Abschirmungen von Sensoren. Beispielsweise können z.B. Materialen in der Umgebung einer Antenne des Sensors oder Aktors deren Impedanz beeinflussen, sodass eine flexible Impedanzanpassung erwünscht ist. Zudem können temporäre Störer auftreten. In diesem Rahmen ist es wünschenswert, eine Sensorik an den betreffenden Sensoren oder Aktoren einzusetzen. Diese benötigt jedoch wiederum zusätzliche Sensoren und/oder Prozessoren, die den Energieverbrauch zusätzlich belasten.

### Druckschriftlicher Stand der Technik

Bei der DE 10 2016 010 045 A1 handelt es sich um ein Verfahren zum Verbessern der Antennenanpassung bei einem Smart-Meter-Zähler im Sendebetrieb. Die Antennenanpassung kann durch Umschalten zwischen unterschiedlich bemessenen Resonanz-Induktivitäten oder -Kapazitäten erfolgen. Jeder Smart-Meter-Zähler eines Netzwerks sendet eine Mehrzahl von Testpaketen mit entsprechend unterschiedliche Impedanzanpassungsschaltungen an einen Datensammler. Der Datensammler wertet die Testpakete aller Smart-Meter-Zähler hinsichtlich dessen Empfangsfeldstärke aus, wählt das Testpaket mit der höchsten Empfangsfeldstärke aus und meldet die Auswahl zurück an den jeweiligen Smart-Meter-Zähler. Dieser sendet fortan mit der entsprechenden Antennenanpassung. Nachteilig bei diesem Verfahren ist es, dass für das Aussenden der Funksignale ein beträchtliches Maß an elektrischer Energie verbraucht und zudem der Funkkanal sehr stark belegt wird und deshalb unter Umständen sogar für einige Zeit blockiert sein kann. Außerdem kann in einem vollen Kanal ein Störer die Empfangsstärkenmessung verfälschen und deshalb zu einem falschen Ergebnis führen.

Die GB 682 544 beschreibt eine Impedanz-Messeinrichtung zur Erfassung von Impedanz Änderungen eines mit Hochfrequenzenergie gespeisten Antennensystems als Bestandteil eines Alarm- oder Warnsystems. Unterschieden wird hierbei zwischen langsamen und schnellen Änderungen der Impedanz der Antenne. Die darin beschriebene Idee zielt darauf ab, langsame Änderungen der Impedanz bedingt durch Änderungen der Umgebungstemperatur, der Feuchtigkeit, der Alterung von Komponenten oder Teilen der Einrichtung zu erfassen und die Impedanz entsprechend anzupassen.

Die US 2015/0178529 A1 beschreibt ein System sowie ein Verfahren zur Detektion eines Ereignisses in Zusammenhang mit einer Person bezogen auf ein Bett. Hierzu umfasst das Bett eine Antenne sowie einen Tag-Reader, der mit der Antenne kommuniziert und an der Person angebracht ist. Befindet sich eine Person im Bett wird eine Änderung der Impedanz der Antenne detektiert und von dem Tag-Reader ein Präsenzsignal generiert. Als Antwort auf das Detektieren des Tags innerhalb einer Schwellwertumgebung des Tag-Readers generiert der Tag-Reader ein Tag-Signal. Über einen Remote-Server werden die Tag-Signale hinsichtlich ihrer zeitlichen Entstehung ausgewertet.

KR 101855428 beschreibt einen Näherungssensor, welcher auf Basis einer Impedanz-Änderung funktioniert.

Die WO 2012/143936 beschreibt Mobilgerät in Form eines Mobiltelefons, welches Änderungen in der näheren Umgebung des Mobilgerätes feststellen kann.

Die US 9,935,798 B2 beschreibt eine automatische Impedanzanpassung für eine Funkempfangskette, um die Antennenimpedanz zu bestimmen und eine Impedanzanpassung durchzuführen.

Die US 2008/0129610 offenbart ein Verfahren zur adaptiven Antennenanpassung für tragbare Hochfrequenz-Radios wie z. B. FM-Empfänger.

Die US 2018/278812 A1 beschreibt eine Bildaufnahmeeinrichtung mit einer wiederaufladbaren Akku.

### Aufgabe der vorliegenden Erfindung

Die Aufgabe der vorliegenden Erfindung besteht darin, ein neuartiges Verfahren zur Umgebungsdetektion eines funkkommunikationsfähigen Knotens zur Verfügung zu stellen, welches ohne zusätzliche Sensorik betrieben werden kann. Darüber hinaus ist es Aufgabe der vorliegenden Erfindung, einen entsprechenden funkkommunikationsfähigen Knoten zur Verfügung zu stellen.

### Lösung der Aufgabe

In Bezug auf das gattungsgemäße Verfahren wird die vorliegende Aufgabe durch die Merkmale des Anspruchs 1 gelöst. Zweckmäßige Ausgestaltungen der erfindungsgemäßen Sensoreinrichtung sind in den abhängigen Ansprüchen beansprucht.

Erfindungsgemäß erfolgt eine Umgebungsdetektion des Knotens auf Basis einer Schätzung der Verstimmung der Antenne des Funkmoduls des Knotens. Umgebungsdetektion bedeutet insbesondere die Feststellung, ob sich ein Gegenstand in der Nähe des Knotens, vorzugsweise in dessen Nahfeld, befindet oder nicht oder ob sich die Umgebung des Knoten verändert hat oder nicht. Hierdurch wird es möglich, die Verstimmung der Antenne zu nutzen, um zu detektieren, ob sich im Bereich der Antenne ein störender Gegenstand befindet oder nicht. Auch kann hierdurch festgestellt werden, ob der Knoten richtig oder falsch installiert worden ist. Ebenfalls ermöglicht das erfindungsgemäße Verfahren ein Detektionsverfahren ohne zusätzlichen Sensor. Daraus resultiert der Vorteil, dass der Knoten sehr kleine Abmessungen haben kann (beispielsweise Knoten mit einer Fläche kleiner 30 cm²). Dadurch, dass keine zusätzlichen Sensoren notwendig sind, müssen auch keine zusätzlichen Mikrokontroller bzw. leistungsfähigere Mikrokontroller im Knoten eingesetzt werden, was zum einen die Kosten zum anderen aber auch den Energieverbrauch reduziert. Letzteres ist besonders vorteilhaft, da hierdurch die autarke Energieversorgungseinrichtung, bei der es sich um eine Longlife-Batterie handelt, geschont und damit längere Standzeiten des Knotens erreicht werden können. Ferner begründet die Antenne einen Doppeleffekt, nämlich einerseits den Effekt des Sendens/Empfangens von Funksignalen sowie andererseits den Effekt einer Umgebungsdetektion.

Eine Schätzung der Verstimmung der Antenne kann vom Knoten vorzugsweise sukzessive bzw. wiederholt durchgeführt werden, um festzustellen, ob in der Umgebung des Knotens eine Veränderung stattgefunden hat oder nicht.

Zweckmäßigerweise erfolgt die Schätzung der Verstimmung der Antenne auf Basis einer Bestimmung der Impedanz, des SNR (Signal zu Noise Verhältnisses), des RSSI (Received Signal Strength Indication) und/oder der Rauschzahl im Empfangspfad, vorzugsweise am Ausgang oder nach dem Ausgang eines Eingangsverstärkers oder eines LNA's des Empfangspfads oder anhand digitaler Signale bzw. Daten oder I/Q-Daten im Empfangspfad.

Insbesondere kann der Knoten eine Bestimmung der Impedanz, des SNR, des RSSI und/oder der Rauschzahl im Empfangspfad, vorzugsweise am Ausgang oder nach dem Ausgang eines Eingangsverstärkers oder LNA's des Empfangspfads oder anhand digitaler Daten oder I/Q-Daten im Empfangspfad, vornehmen und darauf basierend eine Schätzung der Verstimmung der Antenne auf Basis eines Näherungs- oder Best-Fit-Verfahrens durchführen.

Informationen (oder Messwerte) zur Impedanz, SNR, RSSI und/oder Rauschzahl oder die daraus sich ergebende oder daraus abgeleitete Daten können vom Knoten über das Funkmodul, vorzugsweise zusammen mit dem Payload bzw. eigentlichen Nutzdaten beispielsweise in einem Datenpaket oder einem Datentelegram, an eine Basisstation ausgesendet, von dieser empfangen und an eine Zentrale weitergeleitet werden. Hierbei kann es sich um eine Datenzentrale, z. B. in Form einer Cloud, für eine Vielzahl von Knoten des Kommunikationsnetzwerks handeln.

In der Datenzentrale oder Cloud kann erfindungsgemäß die Informationen (oder Messwerte) oder die sich daraus ergebende oder die jeweils daraus abgeleiteten Daten untereinander und/oder mit hinterlegten Daten abgeglichen und/oder miteinander kombiniert werden. Auch können dort empirische Daten für einen Abgleich mit den von den einzelnen Knoten stammenden Daten in Datenbanken oder Vergleichsregistern hinterlegt sein. Dies kann insbesondere auch für eine Mehrzahl von Knoten erfolgen.

Die Schätzung kann vorzugsweise in Echtzeit erfolgen. Unter Echtzeit versteht man einen Betrieb, der im Wesentlichen oder nahezu simultan mit entsprechenden Prozessen in der Realität abläuft.

Bei einer zweckmäßigen Ausgestaltung des erfindungsgemäßen Verfahrens werden empirische Vergleichsdaten zu den Informationen des Knotens oder daraus abgeleiteten Daten vorab in einem Vergleichsregister, vorzugsweise in der Datenzentrale oder Cloud, gespeichert, die während des Betriebes des Knotens ermittelten Schätzdaten oder daraus abgeleiteten Daten mit den empirischen Vergleichsdaten des Vergleichsregisters verglichen und anhand dieses Vergleichs eine Identifizierung oder zumindest Eingruppierung eines Objekts oder einer Umgebungssituation in der Nähe des Knotens durchgeführt.

Anhand der Schätzung kann eine Identifizierung oder zumindest Eingruppierung eines Objekts oder einer Umgebungssituation in der Nähe des Knotens anhand der Schätzdaten oder daraus abgeleiteten Daten erfolgen.

Vorzugsweise kann eine Schätzung im Zuge einer Anpassung der Qualität der Funkübertragung zwischen dem Knoten und der Basisstation erfolgen.

Eine Schätzung der Verstimmung der Antenne kann insbesondere dadurch erfolgen, dass mehrere unterschiedliche Anpassungen der Impedanz, vorzugsweise mittels wählbarer Anpassschaltungen, am Knoten sukzessive eingestellt werden, bei den einzelnen unterschiedlichen Anpassungen der Impedanz im Empfangspfad, vorzugsweise am Ausgang oder nach dem Ausgang eines Eingangsverstärkers oder LNA's des Empfangspfads oder anhand digitaler Signale bzw. Daten oder I/Q-Daten im Empfangspfad, jeweils die Impedanz, das SNR, die RSSI und/oder die Rauschzahl ermittelt bzw. geschätzt wird, und ein Vergleich der so ermittelten Werte vorgenommen wird. Anhand des Vergleichs erkennt der Knoten, ob eine Verstimmung der Antenne durch ein Objekt in der Umgebung des Knotens oder durch ein am Knoten eingetretenes Ereignis stattgefunden hat.

Es ist vorteilhaft, wenn die Schätzung anhand digitaler Signale, insbesondere anhand von I/Q Daten, erfolgt, die aus dem Datenhauptstrom im Empfangspfad, vorzugsweise über eine Schnittstelle oder einen Schalter, abgezweigt werden. Hierdurch kann eine Umgebungsdetektion besonders schnell erfolgen.

Bei der Antenne des Knotens handelt es sich insbesondere um eine schmalbandige Antenne, vorzugsweise um eine Antenne mit einer 3-dB-Bandbreite von weniger als 1 MHz.

Bei der Umgebungsdetektion kann es sich vorzugsweise um folgende Anwendungen handeln:
eine Parkplatzbelegungsdetektion, wobei es sich bei dem die Verstimmung der Antenne begründenden Gegenstand insbesondere um ein Fahrzeug handelt,
eine Manipulationsdetektion,
eine Einbruchsdetektion, wobei es sich bei dem die Verstimmung der Antenne begründenden Gegenstand insbesondere um ein geöffnetes Fenster oder eine geöffnete Tür handelt
eine Behältnis-Füllstanddetektion, wobei es sich bei dem die Verstimmung der Antenne begründenden Gegenstand insbesondere um Füllgut oder Abfall handelt oder
eine Falschinstallationsdetektion.

Bei dem Knoten kann es sich um ein Messgerät oder Sensormodul, insbesondere um einen Verbrauchszähler, und/oder um einen Aktor handeln.

Die Umgebungsdetektion kann von dem Knoten kontinuierlich, beispielsweise zu bestimmten Zeitpunkten, durchgeführt werden, um festzustellen, ob sich in seiner Umgebung etwas verändert hat.

Um eine Umgebungsdetektion des Knotens durchzuführen, können gemäß einer zweckmäßigen Ausgestaltung des erfindungsgemäßen Verfahrens auch mehrere Knoten deren jeweils festgestellte Informationen oder Daten betreffend deren Antennenverstimmung aussenden, um aus dieser Mehrzahl von Informationen Rückschlüsse auf die Umgebung eines oder mehrerer Knoten zu gewinnen. Beispielsweise können durch eine solche Kombination von Informationen von in der Nähe befindlicher Knoten zusätzliche Erkenntnisse in Bezug auf die Umgebung eines oder mehrere Knoten gewonnen werden.

Entsprechendes gilt für Informationen oder Daten betreffend die Verstimmung unterschiedlicher am Knoten vorhandener Antennen (z. B. für unterschiedliche Reichweiten oder Frequenzbereiche). Auch daraus resultierende Informationen oder Daten können für eine Umgebungsdetektion verwendet werden. Alternativ kann eine Identifizierung oder zumindest Eingruppierung eines Objekts oder einer Umgebungssituation in der Nähe des Knotens anhand der während des Betriebs des Knotens ermittelten Verstimmung der Antenne anhand objektspezifischer Eigenschaften erfolgen. Beispielsweise haben Dielektrika (Kunststoffe) die Eigenschaft, die Resonanzfrequenz der Antenne auf eine bestimmte Art zu verschieben. Gleichfalls wirken Metallteile dämpfend und haben die Wirkung, die Antennenimpedanz andersartig zu beeinflussen. Aufgrund einer unterschiedlichen Beeinflussung der Antennenimpedanz kann daher eine Identifizierung oder zumindest eine Eingruppierung des Objekts bzw. der Umgebungssituation in der Nähe des Knotens erfolgen. Hier ist nicht unbedingt eine vorherige empirische Vermessung eines Vergleichsobjekts notwendig.

Vorzugsweise wird hierbei der Realteil und/oder Imaginärteil der ermittelten Impedanz der Antenne ausgewertet. Bei Dielektrika (Kunststoffe) wird die Resonanzfrequenz der Antenne verschoben, wodurch bei einer festgelegten Messfrequenz der Imaginärteil der Antennenimpedanz beeinflusst wird. Metallische Gegenstände demgegenüber wirken dämpfend und beeinflussen die Antennenimpedanz, indem sie deren Realteil vergrößern. Insofern kann über eine Untersuchung des Realteils und/oder Imaginärteils der Impedanz eine Zuordnung über die Verknüpfung mit einer Materialklassifizierung erfolgen.

Aus der geschätzten Impedanz bzw. Impedanz-Änderung kann auch auf den Abstand des Objekts zum Knoten geschlossen werden. Je größer die gemessene quantitative Wirkung des Objekts auf die Antennenimpedanz ist, desto näher ist das Objekt an der Antenne angeordnet. Die Größe (Magnitude) der gemessenen Wirkung kann daher als Maß für den Abstand des Objekts zur Antenne herangezogen werden. Die Feststellung bzw. Schätzung Verstimmung der Antenne bzw. der Impedanz oder einer Impedanz-Änderung erfolgt vorzugsweise im Zuge einer Anpassung der Qualität der Funkübertragung zwischen dem Knoten und der Basisstation. Erfolgt hierzu eine Anpassung der Antennenimpedanz, kann hierbei sozusagen parallel dazu bzw. gleichzeitig eine Nahfelddetektion der Umgebung des Knotens vorgenommen werden.

Vorzugsweise erfolgt das Schätzen der Verstimmung der Antenne im Empfangsmodus des Knotens, wodurch wesentlich weniger Energie verbraucht wird. Damit trägt das erfindungsgemäße Verfahren auch zur Energieeffizienz positiv bei.

Das Schätzen der Verstimmung der Antenne durch den Knoten kann durch Bestimmung des SNR-Verhältnisses von über den Empfangspfad des Funkmoduls eingehenden Empfangssignalen vorgenommen werden. Details zu diesem Verfahren sind im Detail in der parallelen Patentanmeldung DE 102021102208.8 beschrieben, auf dessen Inhalt vollumfänglich Bezug genommen wird. Über einen Vergleich der SNR-Verhältnisse bei unterschiedlichen Anpassungsnetzwerken der Impedanz kann somit die Antennenimpedanz ermittelt werden.

Alternativ oder zusätzlich kann ein Schätzen der Verstimmung der Antenne auch in Abhängigkeit des Rauschens oder der Rauschzahl des Empfangspfads erfolgen. Das diesbezügliche Verfahren ist in der parallelen Patentanmeldung DE 102021102204.5 beschrieben, auf dessen Inhalt ebenfalls vollumfänglich Bezug genommen wird. Über einen Vergleich der Rauschzahl bei unterschiedlichen Anpassungsnetzwerken der Impedanz kann somit ebenfalls die Antennenimpedanz ermittelt werden.

Beide vorgenannten Verfahren nehmen eine Schätzung der Antennenimpedanz im Empfangspfad ohne ein vorheriges Aussenden von Testpaketen vor und sind daher besonders energieeffizient.

Nach Schätzung der Antennenverstimmung im Knoten gemäß dem vorliegenden Verfahren kann die Entscheidung, ob ein die Antennenverstimmung auslösendes Ereignis stattgefunden hat oder nicht vom Knoten selbst oder in der Datenzentrale bzw. Cloud getroffen werden.

Was die energieautarke Energieversorgungseinrichtung, insbesondere Batterie, anbelangt, so besitzt diese zweckmäßigerweise eine Kapazität von weniger als 10 Ah.

Mit dem erfindungsgemäßen Verfahren ist es beispielsweise möglich festzustellen, ob die Tür eines Verbrauchszählers geschlossen oder offen ist, denn eine geschlossene Tür führt zu einem anderen Verzug der Impedanz der Antenne als eine geöffnete Tür. Im Falle einer geöffneten Tür kann beispielsweise ein Hinweis und/oder Alarm im Uplink-Signal signalisiert werden. Ebenso kann eine Einbruchinformation, Zählermanipulation oder das Erkennen einer illegalen Abschirmung am Zähler in einer Uplink-Information übermittelt werden.

Ebenso kann eine Falschinstallation detektiert werden, beispielsweise dann, wenn ein Zähler in einem falschen Gehäuse installiert wird oder ein Zähler an falschen Rohren (an Metallrohren anstatt Plastikrohren oder umgekehrt) installiert worden ist. Die Impedanz der Antenne ist hierbei jeweils unterschiedlich. Durch Senden der Impedanz, Impedanz-Änderung oder daraus abgeleiteter Impedanzdaten kann somit eine Überprüfung der Installation und ein Warnhinweis an den Installateur, vorzugsweise sogar in Realzeit, ausgegeben werden. Hierdurch kann der Installateur sogleich Abhilfe schaffen.

Die vorliegende Erfindung betrifft zudem einen funkkommunikationsfähigen Knoten, insbesondere in Form einer Sensor- und/oder Aktoreinrichtung, für den Einsatz in einem Kommunikationsnetzwerk mit einem mit einer Antenne ausgestatteten Funkmodul mit Sende- und/oder Empfangspfad und einer vorzugsweise energieautarken Energieversorgungseinrichtung, insbesondere Batterie, einem Impedanzanpassungsglied sowie einem Mikroprozessor, wobei der Mikroprozessor derart konfiguriert ist, dass der Knoten gemäß einem Verfahren nach einem der Ansprüche 1-14 betreibbar ist.

### Beschreibung der Erfindung anhand von Ausführungsbeispielen

Zweckmäßige Ausgestaltungen der vorliegenden Erfindung werden anhand von Zeichnungsfiguren näher erläutert. Es zeigen:
- Fig. 1: eine stark vereinfachte schematische Darstellung einer Anordnung mehrerer bidirektional funkkommunikationsfähiger Knoten in einem Kommunikationsnetzwerk,
- Fig. 2: eine stark vereinfachte schematische Darstellung eines Beispiels eines Knotens in Form einer Sensoreinrichtung des Kommunikationsnetzwerks von Fig. 1,
- Fig. 3: eine stark vereinfachte schematische Darstellung eines ersten Beispiels eines Sende- sowie Empfangspfads des Knotens des Kommunikationsnetzwerks von Fig. 1;
- Fig. 4: eine stark vereinfachte schematische Darstellung eines zweiten Beispiels eines Empfangspfads des Knotens des Kommunikationsnetzwerks von Fig. 1;
- Fig. 5: eine stark vereinfachte schematische Darstellung einer Möglichkeit der Zuordnung unter Einsatz empirischer Daten;
- Fig. 6: eine stark vereinfachte schematische Darstellung einer alternativen Möglichkeit der Zuordnung anhand chemischer oder physikalischer Eigenschaften;
- Fig. 7: eine stark vereinfachte schematische Darstellung mehrerer Datenpakete in zeitlicher Abfolge bei einer Uplink-Übertragung;
- Fig. 8: eine stark vereinfachte schematische Darstellung der Detektion eines z.B. temporären Störers sowie
- Fig. 9: eine stark vereinfachte schematische Darstellung eines Funkchips mit Schnittstelle zur Zurverfügungstellung von I/Q-Daten.

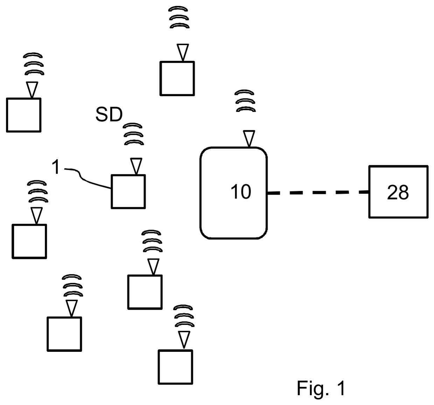

Fig. 1 zeigt eine Anordnung mehrerer bidirektional funkkommunikationsfähiger Knoten 1 z. B. in Form von Sensoreinrichtungen. Diese senden Sensordaten SD z. B. Verbrauchsdaten und/oder sonstige Betriebsdaten an eine Basisstation 10 bzw. Datensammler, in dem die Daten aufbereitet und/oder z. B. über das Internet zur weiteren Verwendung an eine Datenzentrale 28 bzw. Cloud weitergeleitet werden.

Eine Sensoreinrichtung kann z. B. eine physikalische oder chemische Eigenschaft E messen, beispielsweise die Temperatur eines Objekts, den Durchfluss eines Fluids oder Gases als Bestandteil eines Durchflusszählers oder die elektrische Leitzahl (um beispielsweise einen Salzgehalt zu messen). Eine Sensoreinrichtung kann alternativ z.B. die stoffliche Beschaffenheit B oder beispielsweise eine Wasserqualität anhand der Reaktion mit Reagenzien ermitteln. Ein Farbumschlag zeigt, ob die Qualität des Wassers ausreichend gut ist. Schließlich kann eine Sensoreinrichtung auch Messgrößen bezüglich einer situativen Information I erzeugen. Derartige Sensoreinrichtungen können generell bei der Umsetzung des "Internet of Things" (IoT) eingesetzt werden.

Der Knoten 1 könnte bei Bedarf auch als Aktoreinrichtung ausgebildet sein. Ein Aktor erhält elektrische Signale und wirkt auf ein äußeres Objekt ein. Neben dem klassischen Fall einer mechanischen Einwirkung (etwa über ein Stößel, den der Aktor betätigt) gibt es die Möglichkeit einer elektromagnetischen Einwirkung (wenn der Aktor ein elektrisches oder magnetisches Feld erzeugt, das einen ferromagnetischen Gegenstand in einer bestimmten Position hält). Schließlich kann der Aktor auch eine sekundäre Reaktion in dem Objekt über Steuersignale hervorrufen und gewissermaßen als Übersetzer von Signalen, die er selbst über Funk empfängt, in elektrische Signale dienen, die er über eine Leitung weitergibt.

Schließlich könnte ein Knoten 1 sowohl Eigenschaften einer Sensoreinrichtung der oben beschriebenen Art als auch zugleich einer Aktoreinrichtung der oben beschriebenen Art ins sich vereinen.

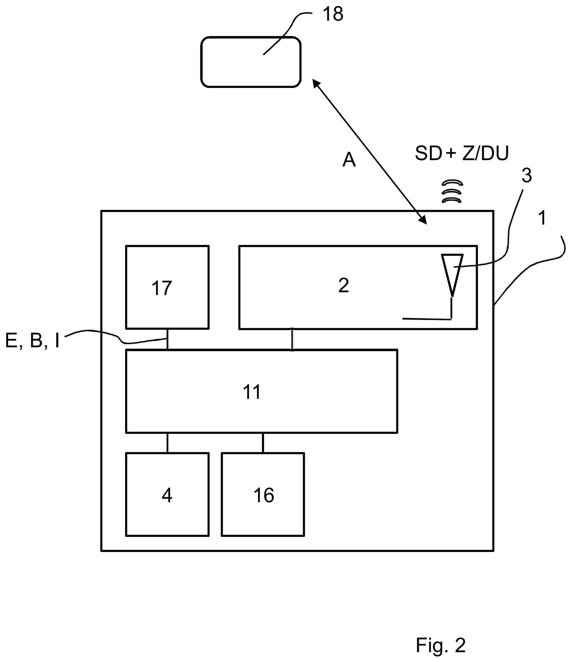

Anhand der Fig. 2 wird ein beispielhafter Aufbau eines Knotens 1 in Form einer Sensoreinrichtung näher erläutert, die aber prinzipiell auch bei einer Aktoreinrichtung identisch oder ähnlich gegeben sein kann.

Die Sensoreinrichtung umfasst eine langzeitenergieautarke Energieversorgungseinrichtung 4, insbesondere eine Batterie. Diese ist insbesondere so ausgelegt, dass sie die Sensoreinrichtung über Jahre hinweg mit elektrischer Energie versorgt. Vorzugsweise weist die Energieversorgungseinrichtung im Hinblick auf eine energiesparende Betriebsweise eine Kapazität von nicht mehr als 10 Ah auf.

Ferner ist ein Funkmodul 2 vorgesehen, in das eine Antenne 3 integriert ist. Aufgrund des beschränkten Bauraums ist die Antenne 3 zwangsläufig schmalbandig. Z. B. besitzt die Antenne eine 3-dB-Bandbreite von weniger als 1 MHz. Darüber hinaus umfasst der Knoten 1 einen Mikroprozessor 11, welcher als Teil des Funkmoduls 2 oder auch separat davon vorgesehen sein kann. Der Mikroprozessor 11 umfasst einen Speicher 16. Ferner kann der Knoten 1 mindestens ein Sensorelement 17, z.B. einen Temperaturfühler, piezoelektrischen Wandler oder dergleichen umfassen, welches dazu dient, eine physikalische oder chemische Eigenschaft E, eine stoffliche Beschaffenheit B oder eine situative Information I zu erfassen und eine entsprechende Messgröße E, B auszugeben.

Alternativ kann das Funkmodul 2 auch eine in der Zeichnung nicht dargestellte koppelbare externe Antenne aufweisen. Auf diese Weise können über eine lösbare Verbindung an dem Knoten 1 bzw. am Funkmodul 2 verschiedene Antennentypen verwendet werden. Hierbei eignet sich das vorliegende Verfahren auch, für jeden Antennentyp die geeignete Anpassung zu finden.

Des Weiteren ist in Fig. 2 beispielhaft und schematisch ein Objekt 18 in der Nähe der Antenne 3 des Funkmoduls 2 in einem Abstand A zum Knoten 1 bzw. zu dessen Antenne 3 dargestellt. Bei einem solchen Objekt 18 kann es sich beispielsweise um einen temporären Gegenstand (geparktes Fahrzeug, geöffnete(s) Fenster bzw. Tür) oder aber um eine permanent vorhandene Umgebungsveränderung (dauerhafte Manipulation oder Falschinstallation) handeln, die eine Veränderung der Impedanz der Antenne 3 bewirkt. Der Knoten 1 nimmt eine Schätzung der Verstimmung der Antenne 3 vor und sendet neben den Sensordaten SD weitere, die Verstimmung des betreffenden Knotens 1 betreffende Daten Z/DU an die Datenzentrale 28 bzw. Cloud.

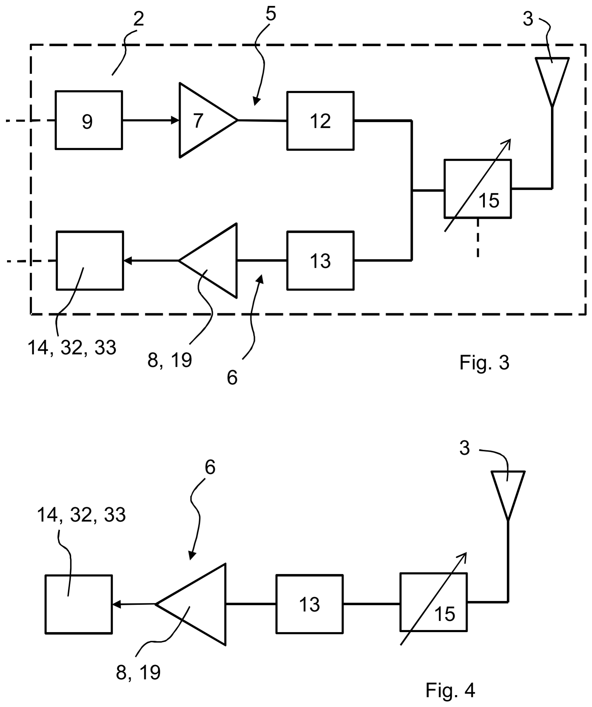

Fig. 3 zeigt in stark vereinfachter schematischer Darstellungsweise eine beispielhafte Variante des Sende- 5 sowie Empfangspfads 6 des Funkmoduls 2 des aus Fig. 2 ersichtlichen Knotens 1. Der Sendepfad 5 umfasst ein TX-Modulationsglied 9 zur Modulation der z. B. von dem in Fig. 3 nicht dargestellten Sensor stammenden Signale, einen PA bzw. Leistungsverstärker 7 sowie ein Anpassglied 12, welches z.B. eine Anpassung auf z. B. 50 Ohm bewirkt. Der Empfangspfad 6 umfasst ebenfalls ein entsprechendes Anpassglied 13, z. B. ebenfalls mit 50 Ohm Anpassung sowie einen Verstärker, z.B. einen LNA 8 ("Low Noise Amplifier") und/oder ein RF Front-End 19, zur Verstärkung der über die Antenne 3 empfangenen Signale.

Der Empfangspfad 6 kann des Weiteren ein Impedanz-Schätzglied, ein SNR-Schätzglied 32 oder Rauschzahl-Schätzglied 14 umfassen, deren jeweilige Funktionsweise in der DE 102021102204.5 bzw. der DE 102021102208.8 näher erläutert wird. Alternativ kann der Empfangspfad 6 auch ein RSSI-Schätzglied 33 umfassen. Die für die Impedanz-Schätzung, SNR-Schätzung, Rauschzahl-Schätzung oder RSSI-Schätzung erforderlichen Messungen werden im Empfangspfad des Knotens 1 von den jeweiligen Schätzgliedern 14, 32 bzw. 33 vorzugsweise am oder nach dem Ausgang des RF-Frontend 19 bzw. des Eingangsverstärkers oder LNA 8 vorgenommen.

Der Antenne 3 nachgeordnet kann ein Anpassglied 15 mit mehreren Anpassungen oder Anpassnetzwerken zur wahlweise mehrstufigen Impedanzanpassung des Eingangspfads 6 sein, welches eine Mehrzahl von wahlweise schaltbaren Impedanzen umfasst, wie dies beispielsweise in der DE 10 2016 010 045 A1 beschrieben ist. Alternativ oder zusätzlich können zu diesem Zweck auch andere steuerbare, die Impedanz anpassende Elemente wie z. B. durch Spannung sich ändernde Kapazitäten (z. B. Kapazitätsdioden) hierbei zum Einsatz kommen. Die Ansteuerung des Impedanzanpassungsglieds 15 kann vorzugsweise durch den Mikroprozessor 11 erfolgen. Das Impedanz-Anpassglied 15 kann beispielsweise auch über feste Anpassnetzwerke auf einer Leiterplatte realisiert sein.

Der Knoten 1 befindet sich im Normalfall im Sleepmodus, um Energie zu sparen. Um ein Empfangssignal zu empfangen, wird vom Knoten 1 ein Empfangsfenster geöffnet, indem der Mikroprozessor 11 den Empfangspfad 6 einschaltet, d.h. diesen auf "Empfang" schaltet. Sobald ein Empfangssignal von der Basisstation 10 oder von einem anderen Sender (z.B. anderen Knoten) über die Antenne 3 empfangen wird, wird mittels des Anpassglieds 15 die Impedanz Z0, Z1, Zn des Empfangspfads 6 sukzessive verändert und in dem Schätzglied 14, 32 bzw. 33 hierzu jeweils die zugehörige Impedanz, Rauschzahl, das zugehörige SNR-Verhältnis oder das zugehörige RSSI ermittelt. Alternativ oder zusätzlich können zu diesem Zweck auch Änderungen der vorgenannten Werte ermittelt werden. Auf diese Weise kann mittels dem jeweiligen Schätzglied 14, 32, 33 auf den aktuellen Grad der Verstimmung der Antenne 3 und damit auf einen bestimmten Abstand A (vgl. Fig. 2) eines Objekts zur Antenne geschlossen werden. Hierdurch kann die Umgebung, vorzugsweise die Nahumgebung des Knotens 1 ohne zusätzlichem Sensor und sogar Abstands-quantitativ detektiert werden.

In dem Schätzglied 14, 32, 33 kann auch diejenige Anpassung des Anpassglieds 15 ausgewählt werden, die für einen Sende- und/oder Empfang am günstigsten ist. Diese kann dann für den Sendebetrieb und/oder Empfangsbetrieb verwendet werden. Die adaptive Anpassung der Impedanz ist bei der in Fig. 3 gezeigten Konfiguration gleich. Die Impedanzanpassung betrifft somit hierbei gleichzeitig auch den Sendepfad 5.

Das Impedanzanpassungsglied 15 kann beispielsweise über feste Anpassungsnetzwerke auf einer Leiterplatte realisiert sein.

Bei der in Fig. 4 gezeigten Konfiguration des Empfangspfads 6 ist das Impedanzanpassungsglied 15 Bestandteil des Empfangspfads 6.

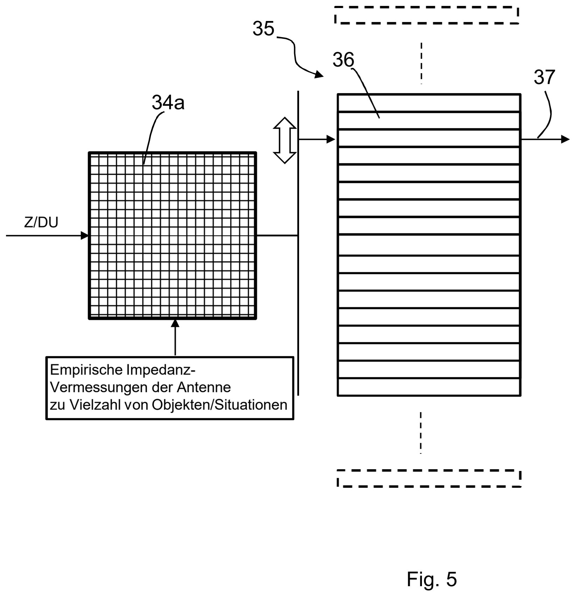

Fig. 5 zeigt eine erste Möglichkeit, mittels der vom Knoten 1 festgestellten, die Verstimmung des Knotens 1 betreffenden Daten Z/DU die Umgebung des Knotens zu detektieren. Hierzu wird vorab im Labor also empirisch der Einfluss unterschiedlichster Objekte auf die Verstimmung der Antenne 3 des Knotens 1 anhand korrespondierender Daten (Impedanz, SNR, RSSI oder Rauschzahl) vermessen und diese empirischen Daten in einem Vergleichsregister 34a oder Look-Up-Table abgelegt. Die eingehenden Werte von Z/DU werden mit dem Inhalt des Vergleichsregisters 34a verglichen und anhand des Ergebnisses des Vergleichs eine entsprechende Ausgabe 37 generiert, beispielsweise durch Ansteuerung über eine Auswahlstabelle 35 und eine Subroutine 36 mit einer vorgegebenen Objektinformation. In dem Ablauf wird geprüft, wie nah die aktuellen Werte an den vordefinierten Werten liegen. In Abhängigkeit davon wird dann die Zuordnung getroffen. Die Ausgabe 37 kann beispielsweise darin bestehen, dass eine illegale Abschirmung am Zähler detektiert worden ist. Vorzugsweise werden die in dem Vergleichsregister 34a hinterlegten Impedanzen bzw. Impedanzdaten nach deren Realteil sowie Imaginärteil spezifiziert. Hierbei wird eine quantitative Veränderung der Impedanz in Real- und Imaginärteil in geeigneter Form in dem Vergleichsregister 34a abgelegt. Im Feld wird dann die gemessene Impedanz Z, bzw. Impedanz-Änderung oder daraus abgeleitete Impedanzdaten DU mit den abgelegten Werten verglichen. Der dem gemessenen Wert am nächsten gelegene tabellierte Wert identifiziert das im Feld zu messende Objekt bzw. die Umgebungssituation.

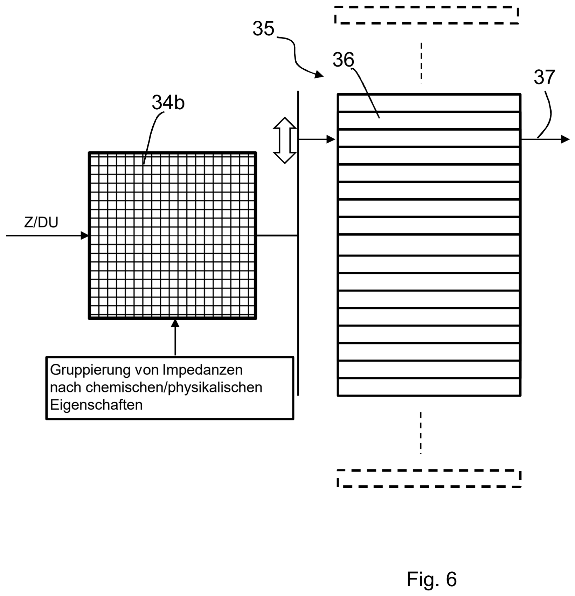

Fig. 6 zeigt eine alternative Ausgestaltung, bei der Objekte in der Nähe der Antenne nach der Beeinflussung der Impedanz, insbesondere des Real- und Imaginärteils derselben, in Abhängigkeit der chemischen und/oder physikalischen Eigenschaften derselben gruppiert werden können. Beispielsweise besitzen Dielektrika (Kunststoffe) die Eigenschaft, die Resonanzfrequenz einer Antenne zu verschieben und beeinflussen daher bei einer festgelegten Messfrequenz den Imaginärteil der Antennenimpedanz. Metallteile wirken demgegenüber dämpfend und haben auf die Antennenimpedanz die Wirkung, dass sie bei den in Knoten der vorliegenden Art typisch vorliegenden elektrisch kurzen und daher niederohmigen Antennen deren Realteil vergrößern. Entsprechende Vergleichsdaten sind in dem Vergleichsregister 34b abgelegt. Ansonsten entspricht die Ausgestaltung der Fig. 6 der Ausgestaltung der Fig. 5. Mit der in Fig. 6 gezeigten Ausgestaltung kann somit ohne ein vorheriges Vermessen von Objekten im Labor auf Basis der Art der Wirkung der Eigenschaft des Störers geschlossen werden, zumindest was das Material desselben anbelangt.

Über die Größe (Magnitude) der gemessenen Wirkung auf die Antennenimpedanz können auch Rückschlüsse auf den Abstand A eines Objekts zur Antenne 3, vgl. Fig. 2, gezogen werden.

Die Überprüfung der Impedanz der Antenne 3 des Knotens 1 erfolgt zweckmäßigerweise zu einem Zeitpunkt, an dem die Verbindung des Knotens 1 zur Basisstation 10 ohnehin zwecks Optimierung derselben überprüft wird.

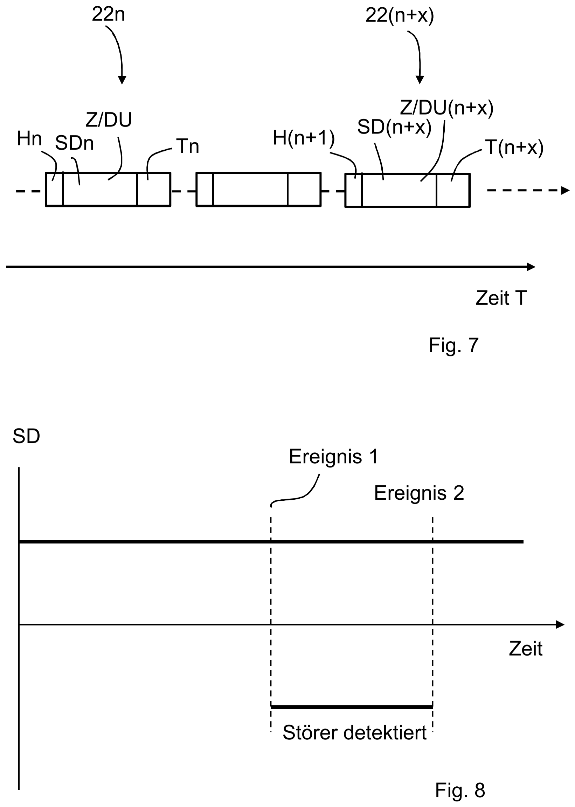

Fig. 7 zeigt eine fortlaufende Uplink-Sequenz von Datenpaketen 22n, 22(n+x), die jeweils neben einem Header Hn, H(n+x) sowie Tail Tn, T(n+x) einen Datenbereich (Payload) aufweisen, in dem im Normalfall die Sensordaten SDn, SD(n+x) enthalten sind, der nun aber erfindungsgemäß auch zusätzliche, die Impedanz der Antenne 3 betreffenden Daten (Z/DU), Z/DU(n+x) beinhaltet. Die betreffenden Impedanzdaten können folglich in einfacher Weise als zusätzliche "Payload" im Uplink zusammen mit den Sensordaten SD übertragen werden.

Fig. 8 zeigt in beispielhafter Darstellung den Eintritt eines Ereignisses 1. Zu diesem Zeitpunkt tritt beispielsweise ein Gegenstand im Bereich der Antenne 3 des Knotens 1 auf. Das Ereignis kann, vorzugsweise wenn erwünscht sogar in Realzeit, festgestellt und eine entsprechende Information ausgegeben werden bzw. eine solche Situation Knoten- und/oder auch System-seitig erfasst werden. Zum Ereignis 2 wird der temporäre Gegenstand wieder entfernt. Bei dem temporären Gegenstand kann es sich beispielsweise um den Versuch einer Manipulation des Knotens 1 beispielsweise durch Öffnen des Gehäuses des Knotens 1 oder durch bewusstes Anbringen einer Abschirmung handeln.

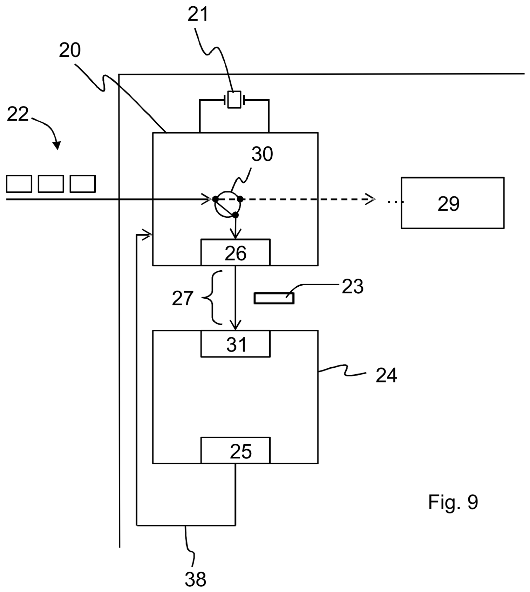

Die Schätzung der Verstimmung der Antenne bei unterschiedlichen Anpassungen der Impedanz kann auch digital erfolgen, wie dies in Fig. 9 beispielhaft gezeigt ist. Die analogen Eingangssignale (Datenpakete 22 oder Teile von Datenpaketen) werden nach dem Eingang in der Empfangseinrichtung bzw. dem Funkchip 20 z. B. mittels eines I/Q-Verfahrens (In-Phase/Quadrature-Verfahren) in digitale bzw. I/Q-Daten verarbeitet. Dies kann beispielsweise dadurch erfolgen, dass das analoge Eingangssignal in zwei Signalteile aufgeteilt wird, wobei ein Signalteil mit der originalen Phasenlage (I-Daten) und der andere Signalteil z. B. um 90° phasenverschobener Referenzfrequenz (Q-Daten) erzeugt wird. Hierbei können die digitalen Daten bzw. I/Q-Daten, z. B. über einen Schalter 30, aus dem Funkchip 20 bzw. RF-Frontend 19 abgezweigt und über eine Schnittstelle 27 einem Mikrokontroller 24 zugeführt werden. Anhand der digitalen Daten 23 bzw. I/Q-Daten kann eine Leistungsmessung (SNR, RSSI, Rauschzahl) z. B. in dem Microcontroller 24 vorgenommen werden. Die abgezweigten digitalen Daten bzw. digitalisierten Signale 23 werden somit nicht im Funkchip 20 oder einem nachgelagerten Dekoder 29 dekodiert, sondern dienen zur Schätzung der Verstimmung der Antenne, insbesondere zur Bestimmung der Rauschleistung bzw. Schätzung der Rauschzahl. Der Funkchip 20 verfügt über eine (nicht in Fig. 9 gezeigte) Antenne, einen Taktgeber (Quarz) 21 sowie einen digitalen Filter 26.

Mittels des Filters 26, der am Funkchip 20 oder am Mikroprozessor 24 angeordnet sein kann, können die Daten 23 z.B. gefiltert und einer Dezimierungseinheit 31 zugeführt werden. Dort wird über einen ganzzahligen Dezimationsfaktor ein Teil der Daten ausgewählt, die schließlich für die Bestimmung der Verstimmung der Antenne herangezogen werden. Zusätzlich kann der Mikrokontroller 24 einen Speicher 25 aufweisen. Die Messdaten oder daraus abgeleitete Daten oder Informationen können im Mikrokontroller 24 für eine weitere Verarbeitung bereitgehalten werden oder über einen Rückkanal 38 dem Funkchip 20 wieder zugeführt werden, damit dort die Festlegung der entsprechenden Anpassung vorgenommen werden kann. Die einzelnen Funktionalitäten können im Funkchip 20 selbstverständlich auch zusammengefasst sein.

Der Knoten kann auf diese Weise an Hand digitaler Daten (I/Q Daten), z. B. innerhalb eines Datenpakets, die Verstimmung der Antenne schätzen. Ferner können die Messwerte oder daraus abgeleiteten Werte untereinander verglichen werden. In Abhängigkeit davon kann die Umgebungsdetektion erfolgen. Diese Art der Schätzung der Verstimmung der Antenne ist deutlich schneller und dazu in seiner Bestimmung erheblich flexibler. Die nicht abgezweigten Daten werden im Dekoder 29 dekodiert.

Das erfindungsgemäße Verfahren ermöglicht eine wirksame Umgebungsdetektioneines uni- oder bidirektional funkkommunikationsfähigen Knoten, z. B. einer Sensor- und/ oder Aktoreinrichtung, die ohne zusätzlicher Sensorik auskommt und die Energiequelle des Knotens nur mäßig belastet.

### BEZUGSZEICHENLISTE

- 1: Knoten
- 2: Funkmodul
- 3: Antenne
- 4: Energiequelle
- 5: Sendepfad
- 6: Empfangspfad
- 7: PA (Power Amplifier)
- 8: LNA (Low Noise Amplifier)
- 9: Basisstation
- 10: Basisstation
- 11: Mikroprozessor
- 12: Rauschanpassungsglied
- 13: Rauschanpassungsglied
- 14: Rauschzahl-Schätzglied
- 15: Impedanzanpassungsglied
- 16: Speicher
- 17: Sensorelement
- 18: Objekt
- 19: RF Front-End
- 20: Funkchip
- 21: Taktgeber (Quarz)
- 22: Datenpaket
- 23: I/Q-Daten
- 24: Mikroprozessor
- 25: Speicher
- 26: Filter
- 27: Schnittstelle
- 28: Datenzentrale
- 29: Decoder
- 30: Schalter
- 31: Dezimierungseinheit
- 32: SNR-Schätzglied
- 33: RSSI-Schätzglied
- 34a: Vergleichsregister
- 34b: Vergleichsregister
- 35: Auswahltabelle
- 36: Subroutine
- 37: Ausgabe
- 38: Rückkanal

- B: stoffliche Beschaffenheit
- DU: Impedanzdaten
- E: physikalische oder chemische Eigenschaft
- I: situativen Information
- SD: Sensordaten
- Z: Impedanz
- F: Rauschzahl

## Patentansprüche

1. Verfahren zur Umgebungsdetektion, vorzugsweise Nahfeldumgebungsdetektion, eines uni- oder bidirektional funkkommunikationsfähigen Knotens (1), insbesondere in Form einer Sensor- und/ oder Aktoreinrichtung, eines Kommunikationsnetzwerkes mit einem mit einer Antenne (3) ausgestatteten Funkmodul (2) mit Sende- (5) und/oder Empfangspfad (6) und einer langzeitenergieautarken Energieversorgungseinrichtung (4), insbesondere Batterie,
die Umgebungsdetektion auf Basis einer Schätzung der Verstimmung der Antenne (3) des Funkmoduls (2), vorzugsweise zu wiederholten zeitlichen Abständen, erfolgt, **dadurch gekennzeichnet, dass** aus der Schätzung der Verstimmung der Antenne (3) oder aus einer Bestimmung der Impedanz, SNR, RSSI oder einer Rauschzahl sich ergebende Informationen (Z) oder daraus abgeleitete Daten (DU) über das Funkmodul (2) vom Knoten (1) ausgesendet werden,
wobei insbesondere vorgesehen ist, dass die von dem Knoten (1) ausgesendeten Informationen oder Daten von einer Basisstation (10) empfangen und an eine Datenzentrale, vorzugsweise an eine Cloud weitergeleitet werden.

2. Verfahren nach Anspruch 1, **dadurch gekennzeichnet, dass**
von einer Mehrzahl von Knoten (1) eines Kommunikationsnetzwerks die sich jeweils aus der Schätzung sich ergebende Informationen oder Daten oder die jeweils daraus abgeleiteten Daten der jeweiligen Knoten (1) über mindestens eine Basisstation (10) an die Datenzentrale oder Cloud gesendet werden, und
die sich aus der Schätzung ergebende Informationen oder Daten oder die jeweils daraus abgeleiteten Daten der Mehrzahl der Knoten (1) untereinander und/oder mit hinterlegten Daten abgeglichen und/oder miteinander kombiniert werden.

3. Verfahren nach einem der vorhergehenden Ansprüche, **dadurch gekennzeichnet, dass**
empirische Vergleichsdaten zu den Informationen oder Daten oder daraus abgeleiteten Daten in einem Vergleichsregister (34a), vorzugsweise in der Datenzentrale oder Cloud, gespeichert werden,
die während des Betriebes des Knotens (1) ermittelten Informationen oder Daten oder daraus abgeleiteten Daten mit den Vergleichsdaten des Vergleichsregisters (21) verglichen werden und
anhand dieses Vergleichs eine Identifizierung oder zumindest Eingruppierung eines Objekts oder einer Umgebungssituation in der Nähe des Knotens (1) durchgeführt wird.

4. Verfahren nach einem der vorhergehenden Ansprüche, **dadurch gekennzeichnet, dass**
eine Identifizierung oder zumindest Eingruppierung eines Objekts oder einer Umgebungssituation in der Nähe des Knotens (1) anhand der Informationen oder Daten oder daraus abgeleiteten Daten erfolgt.

5. Verfahren nach einem der vorhergehenden Ansprüche, **dadurch gekennzeichnet, dass**
es sich bei der Antenne (3) um eine schmalbandige Antenne handelt, wobei die Antenne (3) vorzugsweise eine 3-dB-Bandbreite von weniger als 1 MHz besitzt.

6. Verfahren nach einem der vorhergehenden Ansprüche, **dadurch gekennzeichnet, dass**
es sich bei der Umgebungsdetektion um Folgendes handelt:
eine Parkplatzbelegungsdetektion, wobei es sich bei dem die Verstimmung der Antenne begründenden Gegenstand insbesondere um ein Fahrzeug handelt,
eine Manipulationsdetektion,
eine Einbruchsdetektion, wobei es sich bei dem die Verstimmung der Antenne begründenden Gegenstand insbesondere um ein geöffnetes Fenster oder eine geöffnete Tür handelt,
eine Behältnis-Füllstanddetektion, wobei es sich bei dem die Verstimmung der Antenne begründenden Gegenstand insbesondere um Füllgut oder Abfall handelt oder
eine Falschinstallationsdetektion.

7. Verfahren nach einem der vorhergehenden Ansprüche, **dadurch gekennzeichnet, dass**
es sich bei dem Knoten (1) um ein Messgerät oder Sensormodul, insbesondere um einen Verbrauchszähler, und/oder um einen Aktor handelt.

8. Funkkommunikationsfähiger Knoten (1), insbesondere in Form Sensor- und/oder Aktoreinrichtung, für den Einsatz in einem Kommunikationsnetzwerk mit einem mit einer Antenne (3) ausgestatteten Funkmodul (2) mit Sende- (5) und/oder Empfangspfad (6) und einer langzeitenergieautarken Energieversorgungseinrichtung (4), insbesondere Batterie, einem Impedanzanpassungsglied (15) sowie einem Mikroprozessor (11),
**dadurch gekennzeichnet, dass**
der Mikroprozessor (11) derart konfiguriert ist, dass der Knoten (1) gemäß einem Verfahren nach einem der vorhergehenden Ansprüche betreibbar ist.
